# EUROPEAN PATENT SPECIFICATION

(11) **EP 2 618 237 B1**
(45) Date of publication and mention of the grant of the patent: **28.11.2018**
(21) Application number: 11824539.8
(22) Date of filing: 16.08.2011
(51) Int. Cl.: G06F 3/01

(54) **GESTURE-BASED HUMAN-COMPUTER INTERACTION METHOD AND SYSTEM, AND COMPUTER STORAGE MEDIA**
AUF GESTEN BASIERENDES VERFAHREN UND SYSTEM ZUR INTERAKTION ZWISCHEN MENSCH UND COMPUTER SOWIE COMPUTERSPEICHERMEDIEN
SYSTÈME ET PROCÉDÉ D'INTERACTION HOMME-MACHINE À BASE DE GESTES ET SUPPORT DE STOCKAGE INFORMATIQUE

(30) Priority: 17.09.2010 CN 201010287015
(43) Date of publication of application: 24.07.2013
(73) Proprietor: Tencent Technology (Shenzhen) Company Limited, Shenzhen, Guangdong 518044 (CN)
(72) Inventor: CHENG, Tong, Shenzhen, Guangdong 518044 (CN); YUE, Shuai, Shenzhen, Guangdong 518044 (CN)
(74) Representative: Michalski Hüttermann & Partner Patentanwälte mbB
(86) International application number: PCT/CN2011/078483
(87) International publication number: WO 2012/034469

(56) References cited:
- WO-A1-01/69365
- WO-A1-99/65014
- CN-A- 101 344 816
- CN-A- 101 609 362

## Description

### FIELD OF THE INVENTION

The present disclosure generally relates to the field of computer technology, and more particularly, to a method and system for gesture-based human-machine interaction, and computer-readable medium thereof.

### BACKGROUND OF THE INVENTION

Human-machine interaction for the processing devices like computers generally uses mice, keyboards, and monitors. Being accompany with the technology development, it is desired that more convenient and quick method could be used for human-machine interaction. Voice and handwriting pen have been developed to meet the desire accordingly.

WO 01/69365 A1 relates to a gesture recognition system comprising: means for detecting and generating a signal corresponding a number of markers arranged on an object, means for processing said signal from said detecting means, means for detecting position of said markers in said signal. The markers are divided into first and second set of markers, said first set of markers constituting a reference position and that said system comprises means for detecting movement of said second set of markers and generating a signal as a valid movement with respect to said reference position.

WO 99/65014 A1 relates to a method for providing input signals to a computer system having a display, the computer system being coupled to a video camera or other video source, is accomplished by capturing video data signals generated by the video camera, the video data signals representing a scene, rendering the scene on the display such that the scene is reflected and transparently visible on the display, analyzing the video data signals to detect an object in the scene, and generating an input signal for the computer system in response to the detected object.

During the process of accomplishing the present disclosure, it is discovered by the current inventors that the conventional technology has the drawbacks like:
Voice input may lower the input difficulty when inputting characters, while being rather limited in graphic interface applications. Similarly, pen-based handwriting instructions may have some advantage in inputting Chinese characters, but it is even less convenience than mouse when using in the graphic interface applications.

### SUMMARY OF THE INVENTION

In order to solve the problem of human-machine interaction like voice input and pen-based handwriting can not be used in the graphic interface applications for the processing devices like computers, embodiments of the present disclosure provides a method and system for gesture-based human-machine interaction, and computer-readable medium thereof.
A method for gesture-based human-machine interaction in accordance with claim 1 comprising: capturing images from user's video streams; positioning coordinates of three or more predetermined color blocks in the foreground; and simulating movements of a mouse according to the coordinates of the first color block, and simulating click actions of the mouse according to the coordinates of the other color blocks, wherein the step of capturing user's video stream and capturing images from user's video streams comprises, capturing user's video stream through a camera, and capturing continuous images from the video stream, or capturing discrete images from the video stream by every predetermined interval, wherein the step of positioning coordinates of three or more predetermined color blocks in the foreground comprises, setting up a background model, for generating a mask picture, and removing the background of the images by the mask picture; obtaining predetermined first color block template, second color block template and third color block template, and generating a histogram corresponding to each color block according to the images; calculating a probability distribution diagram of each color block according to the corresponding histogram; tracing a centroid of each color block in the probability distribution diagram, to determine the coordinates of the three color blocks.

The invention is further set out by a system according to claim 5 and a computer-readable medium according to claim 9.

Beneficial effects of the technical solution provided by the embodiments of the present disclosure: the embodiments according to the present disclosure can provide coordinates of a plurality of color blocks through processing captured user's video streams, and simulate mouse actions according to the coordinates of the color blocks. Processing apparatuses like computers may be extended to facilitate gesture-based human-machine interactions through a very simple way, and a touch-sensitive interaction effect can be simulated without the presence of a touch screen.

### BRIEF DESCRIPTION OF THE DRAWINGS

In order to clearly describe the solution of the embodiments of the present disclosure, the following brief description is given for drawings of the embodiments. It shall be definite that the below drawings shall be regarded only as some of the embodiments of the present disclosure. It shall be apparent for those skilled in the art may obtain other drawings according to these drawings below without departing from the true spirit and scope of this invention.
Fig. 1 is a conceptual flow chart of a first embodiment in accordance with the present disclosure;
Fig. 2 is a conceptual flow chart of a second embodiment in accordance with the present disclosure;
Fig. 3 is a conceptual block diagram of a third embodiment in accordance with the present disclosure;
Fig. 4 is a conceptual block diagram of a fourth embodiment in accordance with the present disclosure;

### DESCRIPTION OF THE PREFERRED EMBODIMENTS

In order to make the object, solution and advantages of the present disclosure more clearly, reference will now be made in detail to embodiments and accompanying drawings of the present disclosure.

A principle of the present disclosure is to simulate the mouse operation through the movement of the users' fingers, wherein the movements of the users' fingers are determined by processing the user's video streams. Color block templates may be pre-captured respectively in relation to three fingers, and the captured video streams are processed to determine the position of the fingers. One of the fingers may be used for simulating the movement of the mouse, and the other two fingers may be used for simulating the click action of the mouse. The OpenCV of Intel Corporation has provided the source code library including open sources codes for image processing; the current embodiment may be coded through OpenCV programming. Detailed descriptions of the embodiments of the present disclosure are described below.

### First Embodiment

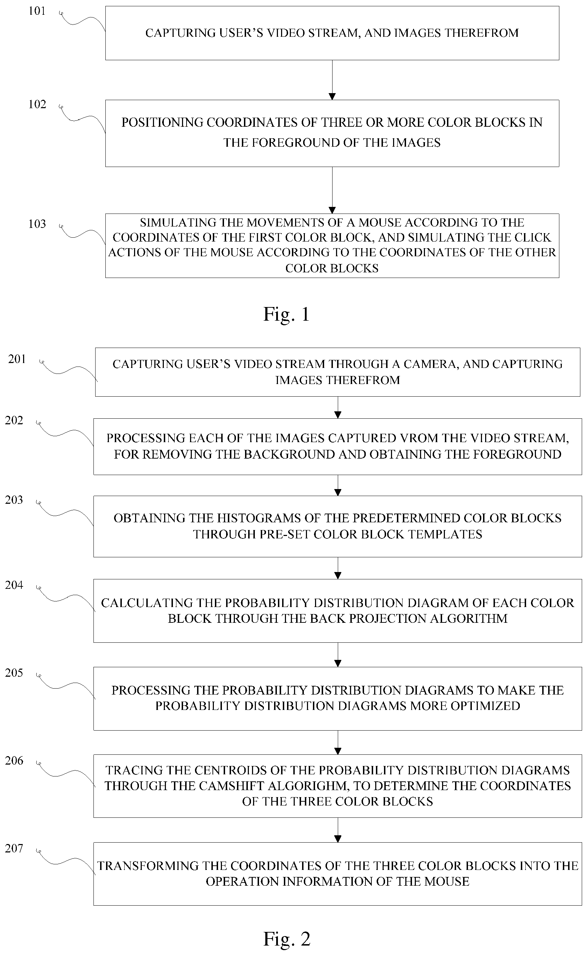

The embodiment of the present disclosure provides a method for gesture-based human-machine interaction. Fig.1 has conceptually illustrated the flow thereof, the method includes:
Step 101, capturing user's video stream and images from the user's video stream;
Step 102, positioning coordinates of three or more predetermined color blocks in the foreground of the images;
Step 103, simulating the movements of a mouse according to the coordinates of the first color block, and simulating the click actions of the mouse according to the coordinates of the other color blocks.

The embodiment of the present disclosure positions coordinates of a plurality of predefined color blocks through processing the captured user's video streams, and simulates mouse actions according to the coordinates of the color blocks. Processing apparatuses like computers may be extended to facilitate gesture-based human-machine interactions through a very simple way, and a touch-sensitive interaction effect can be simulated without the presence of a touch screen.

### Second Embodiment

The second embodiment of the present disclosure is based on improving the first embodiment. Fig.2 has conceptually illustrated the flow thereof, the method includes:
Step 201, capturing user's video stream through a camera, and capturing images from the user's video stream;
wherein, the captured images may be either continuous or discrete. Usually, the velocity of the movement of the users' finger may not be rather high, which makes it possible not to necessarily process all the images, further benefits in saving the processing cost. It should be apparent that for more accuracy requirement, each image captured from the video stream could be processed, and the present invention is not limited thereto.

Step 202, processing each of the images captured from the video stream, for removing the background thereof, therefore obtaining the foreground thereof. It could be understood that usually the environment, like office or home, has little changes in the background of the video stream; the background shall be easy to be determined. Therefore, detailed step 202 includes:
Step 2021, setting up a background model through Code Book algorithm for generating a mask picture; the mask picture may have a same size with the processing image; the foreground of the mask picture is white; and the background of the mask picture is black;
Step 2022, matching the mask picture with the processing image for removing the corresponding image parts; there may be one mask picture; the background model may be used in every remove action practiced on the captured images, for obtaining the foreground image parts.

It should be understood that obtaining the foreground of the images through Code Book algorithm is just one kind of selection for the current embodiment, the present disclosure shall not be limited to this selection and description.

Step 203, obtaining the histograms of the predetermined color blocks through pre-set color block templates.

According to one exemplary embodiment, the movement of one finger on one hand is used for simulating the movement of the mouse, and the two fingers on the other hand is used for simulating the click action of the mouse. Accordingly, it is necessary to track at least three predetermined color blocks.

Moreover, for more distinguishability of the three color blocks, the fingers of the user could wear three sleeves with different colors that are easy to be distinguished. The designated colors shall be stored as templates for the three color blocks, which simplifies the processing.

In accordance with one exemplary embodiment, the OpenCV of Intel Corporation could be used for coding the image processing. OpenCV is supported by Intel Corporation, it is an open source code library for computer vision, and is free for either commercial or non-commercial use. The histograms of the foreground could be calculated through the histogram function in the OpenCV. In the OpenCV, a series of the histogram functions has been packed into the DenseHistogram class, therefore made it possible to calculate the histograms of the images through the "Calculate" thereof.

Color histogram is a kind of color characters, and is widely used in multiple image search engine systems. Color histogram is used for describing the proportion of the different colors to the whole image. Color histogram is much suitable to describe those images that are hard to be distinguished automatically.

The operation described below is executed on the three color blocks, to determine the position of the fingers that are corresponding to the three color blocks, and to determine the click action of the mouse. That is, the step 203 is detailed in:
Step 204, getting the images that are captured in the step 201 and the histograms of the three color blocks that are obtained in the step 203, and calculating the probability distribution diagram of each color block through the Back Projection algorithm.

It shall not be described here how to calculate the probability distribution diagrams through the histograms, since the calculation is common for those skilled in the art.

Step 205, processing the probability distribution diagrams to make the probability distribution diagrams more optimized.

There would exist noise and sawtooth in the probability distribution diagrams obtained from the step 204, therefore it would be necessary to do the image de-noising and smoothing process in the step 205, to make the color blocks more accurate. That is, step 205 includes:
Step 2051, de-noising the probability distribution diagrams through a noise erosion operation;
Step 2052, gaussian smoothing is operated on the probability distribution diagrams; and threshold segmentation is executed on the gaussian smoothed probability distribution diagrams. The threshold segmentation refers to the operation as: setting a predetermined threshold, determining the pixel as the foreground when the pixel of the image is less than the threshold; and determining the pixel as the background when the pixel of the image is not less than the threshold.

Step 206, tracing the centroids of the probability distribution diagrams through the CAMShift (Continuously Apative Mean-Shift) algorithm, to determine the coordinates of the centers of the three color blocks.

The CAMShift algorithm is a kind of practiced movement tracing algorithm, which traces through the color information of the moving objects in the video stream. After transforming the original images into the color probability distribution diagrams through the Back Projection algorithm, it could be possible to calculate the coordinates of the centers of the three color blocks, deemed as the coordinates of the three color blocks.

Step 207, transforming the coordinates of the three color blocks into the operation information of the mouse.

After the coordinates of the centers of the three color blocks are determined, the coordinates of the first color block are transformed as the coordinates of the mouse, and the click action of the left key of the mouse could be determined by the coordinates of the second and the third color blocks. As an example, the distance between the second and the third color blocks are used for determining the click action of the left key of the mouse. When the distance between the second and the third color blocks are less than a predetermined value, it could be regarded that the left key of the mouse is pressed; when the distance is not less than the predetermined value, it could be regarded that the left key of the mouse is released.

In accordance with the current embodiment, through the OpenCV open source code library, the first block of the gesture is transformed into the coordinates of the mouse, and the second and the third blocks of the gesture are transformed into the click actions of the mouse. Human-machine interaction could hereby be accomplished through an easy way.

It shall be noted that the three color blocks mentioned in the current embodiment shall not be regarded as the limit to the present disclosure.

Furthermore, the present disclosure provides one or more computer-readable medium having computer-executive instructions recorded therein, the computer-executive instructions are used for executing a gesture-based human-machine interaction method. The steps that the gesture-based human-machine interaction method is executed according to the computer-executive instructions recorded on the computer-readable medium are as described above, and would not be described herein.

### Third Embodiment

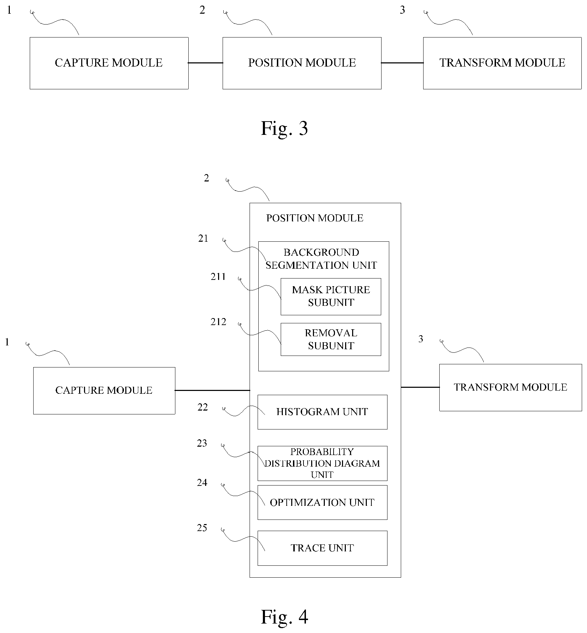

The embodiment of the present disclosure provides a system for gesture-based human-machine interaction. Fig.3 is illustrating the structure thereof, the system includes:
A capture module 1, for capturing the user's video stream and the images from the video stream;
A position module 2, for positioning the coordinates of three or more predetermined color blocks in the foreground of the images;
A transform module 3, for simulating the movement of the mouse according to the coordinates of the first color block, and simulating the click actions of the mouse according to the coordinates of the other color blocks.

The embodiment of the present disclosure positions coordinates of a plurality of predefined color blocks through processing the captured user's video streams, and simulates mouse actions according to the coordinates of the color blocks. Processing apparatuses like computers may be extended to facilitate gesture-based human-machine interactions through a very simple way, and a touch-sensitive interaction effect can be simulated without the presence of a touch screen.

### Fourth Embodiment

The embodiment of the present disclosure is based on improving the third embodiment. Fig.4 has conceptually illustrated the structure thereof. The system includes:
A capture module 1, for capturing the user's video stream through a camera, and capturing images from the user's video stream;
wherein, the captured images may be either continuous or discrete. Usually, the velocity of the movement of the users' finger may not be rather high, which makes it possible not to necessarily process all the images, further benefits in saving the processing cost. It should be apparent that for more accuracy requirement, each image captured from the video stream could be processed, and the present invention is not limited thereto.

A position module 2, for removing the background of the images, and positioning the coordinates of three color blocks in the foreground; the detailed position module 2 may include:
A background segmentation unit 21, for processing each captured image, to remove the background of the image and obtain the foreground thereof. It could be understood that usually the environment, like office or home, has little changes in the background of the video stream, the background shall be easy to be determined. Therefore, detailed background segmentation unit 21 includes:
A mask picture subunit 211, for setting up a background model through Code Book algorithm and generating a mask picture; the mask picture may have a same size with the processing image; the foreground of the mask picture is white; and the background of the mask picture is black;
A removal subunit 212, for matching the mask picture with the processing image, for removing corresponding image parts; there may be one mask picture; the background model may be used in every remove action practiced on the captured images, for obtaining the foreground image parts.

It should be understood that obtaining the foreground of the images through Code Book algorithm is just one kind of selection for the current embodiment, the present disclosure shall not be limited to this selection and description.

A histogram unit 22, for obtaining the histograms of the predetermined color blocks through pre-set color block templates.

According to one exemplary embodiment, the movement of one finger on one hand is used for simulating the movement of the mouse; and the two fingers on the other hand is used for simulating the click action of the mouse. Accordingly, it is necessary to track at least three predetermined color blocks.

Moreover, for more distinguishability of the three color blocks, the fingers of the user could wear three sleeves with different colors that are easy to be distinguished. The designated colors shall be stored as templates for the three color blocks, which simplifies the processing.

In accordance with one exemplary embodiment, the OpenCV of Intel Corporation could be used for coding the image processing. OpenCV is supported by Intel Corporation, it is an open source code library for computer vision, and is free for either commercial or non-commercial use. The histograms of the foreground could be calculated through the histogram function in the OpenCV. In the OpenCV, a series of the histogram functions has been packed into the DenseHistogram class, therefore made it possible to calculate the histograms of the images through the "Calculate" thereof.

Color histogram is a kind of color characters, and is widely used in multiple image search engine systems. Color histogram is used for describing the proportion of the different colors to the whole image. Color histogram is much suitable to describe those images that are hard to be distinguished automatically.

The step described here is executed on the three color blocks, to determine the position of the fingers that are corresponding to the three color blocks, and to determine the click action of the mouse.

A probability distribution diagram unit 23, for calculating the probability distribution diagram of each color block through the Back Projection algorithm according to the images that are captured by the capture module 1, and the histograms of the three color blocks that are obtained by the histogram unit 22.

It shall not be described here how to calculate the probability distribution diagrams through the histograms, since the calculation is common for those skilled in the art.

An optimization unit 24, for processing the probability distribution diagrams to make the probability distribution diagrams more optimized.

There would exist noise and sawtooth in the probability distribution diagrams calculated by the probability distribution diagram unit 23, therefore it would be necessary for the optimization unit 24 to do the image de-noising and smoothing process, to make the color blocks more accurate. The optimization unit 24 includes:
A de-noise subunit, for de-noising the probability distribution diagrams through a noise erosion operation;
A smoothen subunit, for operating gaussian smoothing on the probability distribution diagrams, and executing threshold segmentation on the gaussian smoothed probability distribution diagrams. The threshold segmentation refers to the operation as: setting a predetermined threshold, determining the pixel as the foreground when the pixel of the image is less than the threshold; and determining the pixel as the background when the pixel of the image is not less than the threshold.

A trace unit 25, for tracing the centroids of the probability distribution diagrams through the CAMShift (Continuously Apative Mean-Shift) algorithm, to determine the coordinates of the centers of the three color blocks, deemed as the coordinates of the three color blocks.

The CAMShift algorithm is a kind of practiced movement tracing algorithm, which traces through the color information of the moving objects in the video stream. After transforming the original images into the color probability distribution diagrams through the Back Projection algorithm, it could be possible to calculate the coordinates of the centers of the three color blocks.

Transform module 3, for transforming the coordinates of the three color blocks into the operation information of the mouse.

After the coordinates of the centers of the three color blocks are determined, the coordinates of the first color block are transformed as the coordinates of the mouse, and the click action of the left key of the mouse could be determined by the coordinates of the second and the third color blocks. As an example, the distance between the second and the third color blocks are used for determining the click action of the left key of the mouse. When the distance between the second and the third color blocks are less than a predetermined value, it could be regarded that the left key of the mouse is pressed; when the distance is not less than the predetermined value, it could be regarded that the left key of the mouse is released.

In accordance with the current embodiment, through the OpenCV open source code library, the first color block of the gesture is transformed into the coordinates of the mouse, and the second and the third color blocks of the gesture are transformed into the click actions of the mouse. Human-machine interaction could hereby be accomplished through an easy way.

It shall be noted that the three color blocks mentioned in the current embodiment shall not be regarded as the limit to the present disclosure.

The principle of the systems according to the third and the fourth embodiments are identical with the aforesaid methods according to the first and the second embodiments, therefore, the identical parts would not be described.

The unit as provided by the embodiment of the present disclosure could be recorded on a computer-readable medium, if the units are provided to exist as the software functional units, and distributed and used as individual products. Based on such understanding, the current inventive disclosure can be existed as the individual products. The individual product could be recorded in a storage medium, and includes instructions for making a processing device (such as a personal computer, a server, or a network device) to execute the whole or part of the method as described by the embodiments according to the present disclosure. Such storage medium can be a USB flash memory, a portable hard disk, a read-only memory, a random access memory, a magnetic disk, an optical disk, or any other medium that is able to record program codes.

## Claims

1. A method for gesture-based human-machine interaction, comprising:
capturing images from user's video streams (101);
positioning coordinates of three or more predetermined color blocks in the foreground (102); and
simulating movements of a mouse according to the coordinates of the first color block, and simulating click actions of the mouse according to the coordinates of the other color blocks (103), **characterized in that** the step of capturing images from user's video streams (101) comprises,
capturing user's video stream through a camera, and capturing continuous images from the video stream (201), or capturing discrete images from the video stream by every predetermined interval,
wherein the step of positioning coordinates of three or more predetermined color blocks in the foreground (102) comprises,
setting up a background model, for generating a mask picture, and removing the background of the images by the mask picture;
obtaining predetermined first color block template, second color block template and third color block template, and generating a histogram corresponding to each color block according to the images;
calculating a probability distribution diagram of each color block according to the corresponding histogram;
tracing a centroid of each color block in the probability distribution diagram, to determine the coordinates of the three color blocks.

2. The method for gesture-based human-machine interaction according to claim 1, wherein the step of simulating click actions of the mouse according to the coordinates of the other color blocks comprises,
determining a straight line distance between the coordinates of the second color block and the third color block, and determining if the straight line distance is less than a predetermined threshold value; simulating a press action of a left key of the mouse if the straight line distance is less than the predetermined threshold value; simulating a release action of the left key of the mouse if the straight line distance is not less than the predetermined threshold value.

3. The method for gesture-based human-machine interaction according to claim 2, wherein the step of obtaining predetermined three color block templates comprises,
wearing three sleeves on fingers with different colors, and storing the colors of the sleeves as templates for the color blocks.

4. The method for gesture-based human-machine interaction according to claim 1, further comprising the following steps after the step of calculating the probability distribution diagram of each color block according to the corresponding histogram:
de-noising the probability distribution diagrams through a noise erosion operation;
operating gaussian smoothing on the probability distribution diagrams, and executing threshold segmentation on the gaussian smoothed diagrams.

5. A system for gesture-based human-machine interaction, comprising:
a capture module (1) for capturing images from user's video streams;
a position module (2) for positioning coordinates of three or more predetermined color blocks in the foreground; and
a transform module (3) for simulating movements of a mouse according to the coordinates of the first color block, and simulating click actions of the mouse according to the coordinates of the other color blocks, **characterized in that** the capture module (1) captures the user's video stream through a camera, and captures continuous images from the video stream, or capturing discrete images from the video stream by every predetermined interval,
wherein the position module (2) comprises,
a background segmentation unit (21) for setting up a background model for generating a mask picture, and removing the background of the images by the mask picture;
a histogram unit (22) for obtaining predetermined first color block template, second color block template and third color block template, and generating a histogram corresponding to each color block according to the images;
a probability distribution diagram unit (23) for calculating a probability distribution diagram of each color block according to the corresponding histogram;
a trace unit (25) for tracing a centroid of each color block in the probability distribution diagram, to determine the coordinates of the three color blocks.

6. The system for gesture-based human-machine interaction according to claim 5, wherein the transform module (3) is for determining the straight line distance between the coordinates of the second color block and the third color block, and determining if the straight line distance is less than a predetermined threshold value; simulating a press action of a left key of the mouse if the straight line distance is less than the predetermined threshold value; simulating a release action of the left key of the mouse if the straight line distance is not less than the predetermined threshold value.

7. The system according to claim 6, wherein the system further comprises,
three sleeves with different colors wore on fingers, the colors of the sleeves are stored as templates for the color blocks.

8. The system according to claim 5, wherein the position module (2) further comprises an optimization unit (24), the optimization unit (24) comprises a de-noise subunit and a smoothen subunit; the de-noise subunit is used for de-noising through operating a noise erosion operation on the probability distribution diagrams; the smoothen subunit is used for operating gaussian smoothing on the probability distribution diagrams, and executing threshold segmentation on the gaussian smoothed diagrams.

9. At least one computer-readable medium having recorded therein computer-executive instructions, the computer-executive instructions are used for executing a gesture-based human-machine interaction method, the method comprises,
capturing images from user's video streams (101);
positioning coordinates of three or more predetermined color blocks in the foreground (102); and
simulating movements of a mouse according to the coordinates of the first color block, and simulating click actions of the mouse according to the coordinates of the other color blocks (103),
wherein the step of capturing images from user's video streams (101) is **characterized by** capturing user's video stream through a camera, and capturing continuous images from the video stream (201), or capturing discrete images from the video stream by every predetermined interval,
wherein the step of positioning coordinates of three or more predetermined color blocks in the foreground (102) comprises,
setting up a background model, for generating a mask picture, and removing the background of the images by the mask picture;
obtaining predetermined first color block template, second color block template and third color block template, and generating a histogram corresponding to each color block according to the images;
calculating a probability distribution diagram of each color block according to the corresponding histogram;
tracing a centroid of each color block in the probability distribution diagram to determine the coordinates of the three color blocks.

10. The computer-readable medium according to claim 9, wherein the step of simulating click actions of the mouse according to the coordinates of the other color blocks (103) comprises,
determining the straight line distance between the coordinates of the second color block and the third color block, and determining if the straight line distance is less than a predetermined threshold value; simulating a press action of a left key of the mouse if the straight line distance is less than the predetermined threshold value; simulating a release action of the left key of the mouse if the straight line distance is not less than the predetermined threshold value.

11. The computer-readable medium according to claim 10, wherein the step of obtaining predetermined three color block templates comprises,
wearing three sleeves on fingers with different colors, and storing the colors of the sleeves as templates for the color blocks.

12. The computer-readable medium according to claim 9, wherein the following steps are comprised after the step of calculating the probability distribution diagram of each color block according to the corresponding histogram,
de-noising the probability distribution diagrams through a noise erosion operation;
operating gaussian smoothing on the probability distribution diagrams, and executing threshold segmentation on the gaussian smoothed diagrams.

## Patentansprüche

1. Auf Gesten basierendes Verfahren zur Interaktion zwischen Mensch und Computer, umfassend:
Erfassen von Bildern aus Videostreams (101) eines Benutzers;
Positionieren von Koordinaten von drei oder mehr vorbestimmten Farbblöcken im Vordergrund (102); und
Simulieren von Bewegungen einer Maus gemäß Koordinaten des ersten Farbblocks, und Simulieren von Click-Aktionen der Maus gemäß den Koordinaten der anderen Farbblöcke (103), **dadurch gekennzeichnet, dass** der Schritt des Erfassens von Bildern aus Videostreams (101) des Benutzers umfasst:
Erfassen des Videostreams des Benutzers durch eine Kamera, und Erfassen kontinuierlicher Bilder aus dem Videostream (201), oder Erfassen diskreter Bilder aus dem Videostream an jedem vorbestimmten Intervall,
wobei der Schritt des Positionierens von Koordinaten von drei oder mehr vorbestimmten Farbblöcken im Vordergrund (102) umfasst:
Einrichten eines Hintergrundmodells zum Generieren eines Maskenbildes, und Entfernen des Hintergrundes der Bilder durch das Maskenbild;
Erhalten einer vorbestimmten ersten Farbblockvorlage, zweiten Farbblockvorlage und dritten Farbblockvorlage, und Generieren eines Histogramms entsprechend jedem Farbblock gemäß den Bildern;
Berechnen eines Wahrscheinlichkeitsverteilungsdiagramms von jedem Farbblock gemäß dem entsprechenden Histogramm;
Verfolgen eines Schwerpunkts von jedem Farbblock in dem Wahrscheinlichkeitsverteilungsdiagramm, um die Koordinaten der drei Farbblöcke zu bestimmen.

2. Auf Gesten basierendes Verfahren zur Interaktion zwischen Mensch und Computer nach Anspruch 1, wobei der Schritt des Simulierens von Click-Aktionen der Maus gemäß den Koordinaten der anderen Farbblöcke umfasst:
Bestimmen einer geradlinigen Distanz zwischen den Koordinaten des zweiten Farbblocks und des dritten Farbblocks, und Bestimmen, ob die geradlinige Distanz kleiner als ein vorbestimmter Schwellenwert ist;
Simulieren einer Druckaktion einer linken Taste der Maus, falls die geradlinige Distanz kleiner als der vorbestimmte Schwellenwert ist;
Simulieren einer Loslassaktion der linken Taste der Maus, falls die geradlinige Distanz nicht kleiner als der vorbestimmte Schwellenwert ist.

3. Auf Gesten basierendes Verfahren zur Interaktion zwischen Mensch und Computer nach Anspruch 2, wobei der Schritt des Erhaltens von vorbestimmten drei Farbblockvorlagen umfasst:
Tragen von drei Hülsen mit unterschiedlichen Farben auf Fingern, und Speichern der Farben der Hülsen als Vorlagen für die Farbblöcke.

4. Auf Gesten basierendes Verfahren zur Interaktion zwischen Mensch und Computer nach Anspruch 1, ferner umfassend die folgenden Schritte nach dem Schritt des Berechnens des Wahrscheinlichkeitsverteilungsdiagramms von jedem Farbblock gemäß dem entsprechenden Histogramm;
Entrauschen der Wahrscheinlichkeitsverteilungsdiagramme durch eine Rauschminderungsoperation; Durchführen von Gauss'scher Glättung mit den Wahrscheinlichkeitsverteilungsdiagrammen, und Ausführen von Schwellenwertsegmentierung mit den Gauss-geglätteten Diagrammen.

5. Auf Gesten basierendes System zur Interaktion zwischen Mensch und Computer, umfassend:
ein Erfassungsmodul (1) zum Erfassen von Bildern aus Videostreams eines Benutzers;
ein Positionsmodul (2) zum Positionieren von Koordinaten von drei oder mehr vorbestimmten Farbblöcken im Vordergrund; und
ein Transformationsmodul (3) zum Simulieren von Bewegungen einer Maus gemäß den Koordinaten des ersten Farbblocks, und Simulieren von Click-Aktionen der Maus gemäß den Koordinaten der anderen Farbblöcke,
**dadurch gekennzeichnet, dass**
das Erfassungsmodul (1) den Videostream des Benutzers durch eine Kamera erfasst, und kontinuierliche Bilder aus dem Videostream erfasst, oder an jedem vorbestimmten Intervall diskrete Bilder aus dem Videostream erfasst,
wobei das Positionsmodul (2) umfasst:
eine Hintergrundsegmentierungseinheit (21) zum Einrichten eines Hintergrundmodells zum Generieren eines Maskenbildes, und Entfernen des Hintergrundes der Bilder durch das Maskenbild;
eine Histogrammeinheit (22), um eine vorbestimmte erste Farbblockvorlage, zweite Farbblockvorlage und dritte Farbblockvorlage zu erhalten, und Generieren eines Histogramms entsprechend jedem Farbblock gemäß den Bildern;
eine Wahrscheinlichkeitsverteilungsdiagrammeinheit (23) zum Berechnen eines Wahrscheinlichkeitsverteilungsdiagramms jedes Farbblocks gemäß dem entsprechenden Histogramm;
eine Verfolgungseinheit (25) zum Verfolgen eines Schwerpunkts von jedem Farbblock in dem Wahrscheinlichkeitsverteilungsdiagramm, um die Koordinaten der drei Farbblöcke zu bestimmen.

6. Auf Gesten basierendes System zur Interaktion zwischen Mensch und Computer nach Anspruch 5, wobei das Transformationsmodul (3) zum Bestimmen der geradlinigen Distanz zwischen den Koordinaten des zweiten Farbblocks und des dritten Farbblocks dient, und zum Bestimmen, ob die geradlinige Distanz kleiner als ein vorbestimmter Schwellenwert ist; zum Simulieren einer Druckaktion einer linken Taste der Maus, falls die geradlinige Distanz kleiner als der vorbestimmte Schwellenwert ist; zum Simulieren einer Loslassaktion der linken Taste der Maus, falls die geradlinige Distanz nicht kleiner als der vorbestimmte Schwellenwert ist.

7. System nach Anspruch 6, wobei das System ferner umfasst:
drei Hülsen mit unterschiedlicher Farbe, die auf Fingern getragen werden, wobei die Farben der Hülsen als Vorlagen für die Farbblöcke gespeichert sind.

8. System nach Anspruch 5, wobei das Positionsmodul (2) ferner eine Optimierungseinheit (24) umfasst, wobei die Optimierungseinheit (24) eine Entrauschungsteileinheit und eine Glättungsteileinheit umfasst; wobei die Entrauschungsteileinheit zum Entrauschen während des Durchführens einer Rauschverminderungsoperation an den Wahrscheinlichkeitsverteilungsdiagrammen verwendet wird; die Glättungseinheit zum Durchführen von Gauss'scher Glättung an den Wahrscheinlichkeitsverteilungsdiagrammen und Ausführen von Schwellenwertsegmentierung an den Gauss-geglätteten Diagrammen verwendet wird.

9. Mindestens ein computerlesbares Medium, auf dem computerausführbare Anweisungen aufgezeichnet sind, wobei die computerausführbaren Anweisungen zum Ausführen eines auf Gesten basierenden Verfahrens zur Interaktion zwischen Mensch und Computer verwendet werden, wobei das Verfahren umfasst:
Erfassen von Bildern aus Videostreams (101) eines Benutzers;
Positionieren von Koordinaten von drei oder mehr vorbestimmten Farbblöcken im Vordergrund (102); und
Simulieren von Bewegungen einer Maus gemäß den Koordinaten des ersten Farbblocks, und Simulieren von Click-Aktionen der Maus gemäß den Koordinaten der anderen Farbblöcke (103),
wobei der Schritt des Erfassens von Bildern aus Videostreams (101) eines Benutzers **gekennzeichnet ist durch**:
Erfassen des Videostreams des Benutzers **durch** eine Kamera, und Erfassen kontinuierlicher Bilder aus dem Videostream (201), oder Erfassen diskreter Bilder aus dem Videostream an jedem vorbestimmten Intervall,
wobei der Schritt des Positionierens von Koordinaten von drei oder mehr vorbestimmten Farbblöcken im Vordergrund (102) umfasst:
Einrichten eines Hintergrundmodells zum Generieren eines Maskenbildes, und Entfernen des Hintergrundes der Bilder **durch** das Maskenbild;
Erhalten einer vorbestimmten ersten Farbblockvorlage, zweiten Farbblockvorlage und dritten Farbblockvorlage, und Generieren eines Histogramms entsprechend jedem Farbblock gemäß den Bildern;
Berechnen eines Wahrscheinlichkeitsverteilungsdiagramms von jedem Farbblock gemäß dem entsprechenden Histogramm;
Verfolgen eines Schwerpunkts von jedem Farbblock in dem Wahrscheinlichkeitsverteilungsdiagramm, um die Koordinaten der drei Farbblöcke zu bestimmen.

10. Computerlesbares Medium nach Anspruch 9, wobei der Schritt des Simulierens von Click-Aktionen der Maus gemäß den Koordinaten der anderen Farbblöcke (103) umfasst:
Bestimmen der geradlinigen Distanz zwischen den Koordinaten des zweiten Farbblocks und des dritten Farbblocks, und Bestimmen, ob die geradlinige Distanz kleiner als ein vorbestimmter Schwellenwert ist;
Simulieren einer Druckaktion einer linken Taste der Maus, wenn die geradlinige Distanz kleiner als der vorbestimmte Schwellenwert ist;
Simulieren einer Loslassaktion der linken Taste der Maus, falls die geradlinige Distanz nicht kleiner als der vorbestimmte Schwellenwert ist.

11. Computerlesbares Medium nach Anspruch 10, wobei der Schritt des Erhaltens von vorbestimmten drei Farbblockvorlagen umfasst:
Tragen von drei Hülsen mit unterschiedlichen Farben auf Fingern, und Speichern der Farben der Hülsen als Vorlagen für die Farbblöcke.

12. Computerlesbares Medium nach Anspruch 9, wobei die folgenden Schritte nach dem Schritt des Berechnens des Wahrscheinlichkeitsverteilungsdiagramms von jedem Farbblock gemäß dem entsprechenden Histogramm enthalten sind:
Entrauschen der Wahrscheinlichkeitsverteilungsdiagramme durch eine Rauschminderungsoperation;
Durchführen von Gauss'scher Glättung mit den Wahrscheinlichkeitsverteilungsdiagrammen, und Ausführen von Schwellenwertsegmentierung mit den Gauss-geglätteten Diagrammen.

## Revendications

1. Procédé d'interaction homme-machine à base de gestes, comprenant :
la capture d'images à partir de flux vidéo d'utilisateur (101) ;
le positionnement de coordonnées d'au moins trois blocs de couleur prédéterminés au premier plan (102) ; et
la simulation de déplacements d'une souris en fonction des coordonnées du premier bloc de couleur, et la simulation d'actions de clic de la souris en fonction des coordonnées des autres blocs de couleur (103), **caractérisé en ce que** l'étape de capture d'images à partir de flux vidéo d'utilisateur (101) comprend
la capture d'un flux vidéo d'utilisateur par une caméra, et la capture d'images continues à partir du flux vidéo (201), ou la capture d'images discrètes à partir du flux vidéo à chaque intervalle prédéterminé,
dans lequel l'étape de positionnement de coordonnées d'au moins trois blocs de couleur prédéterminés au premier plan (102) comprend
la configuration d'un modèle d'arrière-plan, pour générer un dessin de masque, et le retrait de l'arrière-plan des images par le dessin de masque ;
l'obtention d'un premier modèle de bloc de couleur, d'un deuxième modèle de bloc de couleur et d'un troisième modèle de bloc de couleur prédéterminés, et la génération d'un histogramme correspondant à chaque bloc de couleur en fonction des images ;
le calcul d'un diagramme de distribution de probabilité de chaque bloc de couleur en fonction de l'histogramme correspondant ;
le traçage d'un centroïde de chaque bloc de couleur dans le diagramme de distribution de probabilité, pour déterminer les coordonnées des trois blocs de couleur.

2. Procédé d'interaction homme-machine à base de gestes selon la revendication 1, dans lequel l'étape de simulation d'actions de clic de la souris en fonction des coordonnées des autres blocs de couleur comprend
la détermination d'une distance en ligne droite entre les coordonnées du deuxième bloc de couleur et du troisième bloc de couleur, et la détermination que la distance en ligne droite est inférieure ou non à une valeur seuil prédéterminée ; la simulation d'une action d'appui sur un bouton gauche de la souris si la distance en ligne droite est inférieure à la valeur seuil prédéterminée ; la simulation d'une action de libération du bouton gauche de la souris si la distance en ligne droite n'est pas inférieure à la valeur seuil prédéterminée.

3. Procédé d'interaction homme-machine à base de gestes selon la revendication 2, dans lequel l'étape d'obtention de trois modèles de bloc de couleur prédéterminés comprend
le port de trois manchons sur des doigts avec des couleurs différentes, et le stockage des couleurs des manchons comme modèles pour les blocs de couleur.

4. Procédé d'interaction homme-machine à base de gestes selon la revendication 1, comprenant en outre les étapes suivantes après l'étape de calcul du diagramme de distribution de probabilité de chaque bloc de couleur en fonction de l'histogramme correspondant :
le débruitage des diagrammes de distribution de probabilité par une opération de réduction du bruit ;
la réalisation d'un lissage gaussien sur les diagrammes de distribution de probabilité, et l'exécution d'une segmentation par seuil sur les diagrammes soumis à un lissage gaussien.

5. Système d'interaction homme-machine à base de gestes, comprenant :
un module de capture (1) pour capturer des images à partir de flux vidéo d'utilisateur ;
un module de positionnement (2) pour positionner des coordonnées d'au moins trois blocs de couleur prédéterminés au premier plan ; et
un module de transformation (3) pour simuler des déplacements d'une souris en fonction des coordonnées du premier bloc de couleur, et simuler des actions de clic de la souris en fonction des coordonnées des autres blocs de couleur,
**caractérisé en ce que**
le module de capture (1) capture le flux vidéo d'utilisateur par une caméra, et capture des images continues à partir de flux vidéo, ou capture des images discrètes à partir du flux vidéo à chaque intervalle prédéterminé,
dans lequel le module de positionnement (2) comprend
une unité de segmentation d'arrière-plan (21) pour configurer un modèle d'arrière-plan pour générer un dessin de masque, et retirer l'arrière-plan des images par le dessin de masque ;
une unité d'histogramme (22) pour obtenir un premier modèle de bloc de couleur, un deuxième modèle de bloc de couleur et un troisième modèle de bloc de couleur prédéterminés, et générer un histogramme correspondant à chaque bloc de couleur en fonction des images ;
une unité de diagramme de distribution de probabilité (23) pour calculer un diagramme de distribution de probabilité de chaque bloc de couleur en fonction de l'histogramme correspondant ;
une unité de traçage (25) pour tracer un centroïde de chaque bloc de couleur dans le diagramme de distribution de probabilité, pour déterminer les coordonnées des trois blocs de couleur.

6. Système d'interaction homme-machine à base de gestes selon la revendication 5, dans lequel le module de transformation (3) sert à déterminer la distance en ligne droite entre les coordonnées du deuxième bloc de couleur et du troisième bloc de couleur, et déterminer si la distance en ligne droite est inférieure à une valeur seuil prédéterminée ; simuler une action d'appui sur un bouton gauche de la souris si la distance en ligne droite est inférieure à la valeur seuil prédéterminée ; simuler une action de libération du bouton gauche de la souris si la distance en ligne droite n'est pas inférieure à la valeur seuil prédéterminée.

7. Système selon la revendication 6, le système comprenant en outre
trois manchons avec des couleurs différentes portés sur des doigts, les couleurs des manchons étant stockées comme modèles pour les blocs de couleurs.

8. Système selon la revendication 5, dans lequel le module de positionnement (2) comprend en outre une unité d'optimisation (24), l'unité d'optimisation (24) comprend une sous-unité de débruitage et une sous-unité de lissage ; la sous-unité de débruitage est utilisée pour un débruitage par réalisation d'une opération de réduction du bruit sur les diagrammes de distribution de probabilité ; la sous-unité de lissage est utilisée pour réaliser un lissage gaussien sur les diagrammes de distribution de probabilité, et exécuter une segmentation par seuil sur les diagrammes soumis à un lissage gaussien.

9. Au moins un support lisible par ordinateur ayant, enregistrées dans celui-ci, des instructions exécutables par ordinateur, les instructions exécutables par ordinateur étant utilisées pour exécuter un procédé d'interaction homme-machine à base de gestes, le procédé comprenant
la capture d'images à partir de flux vidéo d'utilisateur (101) ;
le positionnement de coordonnées d'au moins trois blocs de couleur prédéterminés au premier plan (102) ; et
la simulation de déplacements d'une souris en fonction des coordonnées du premier bloc de couleur, et la simulation d'actions de clic de la souris en fonction des coordonnées des autres blocs de couleur (103),
dans lequel l'étape de capture d'images à partir de flux vidéo d'utilisateur (101) est **caractérisée par**
la capture d'un flux vidéo d'utilisateur par une caméra, et la capture d'images continues à partir du flux vidéo (201), ou la capture d'images discrètes à partir du flux vidéo à chaque intervalle prédéterminé,
dans lequel l'étape de positionnement de coordonnées d'au moins trois blocs de couleur prédéterminés au premier plan (102) comprend
la configuration d'un modèle d'arrière-plan, pour générer un dessin de masque, et le retrait de l'arrière-plan des images par le dessin de masque ;
l'obtention d'un premier modèle de bloc de couleur, d'un deuxième modèle de bloc de couleur et d'un troisième modèle de bloc de couleur prédéterminés, et la génération d'un histogramme correspondant à chaque bloc de couleur en fonction des images ;
le calcul d'un diagramme de distribution de probabilité de chaque bloc de couleur en fonction de l'histogramme correspondant ;
le traçage d'un centroïde de chaque bloc de couleur dans le diagramme de distribution de probabilité pour déterminer les coordonnées des trois blocs de couleur.

10. Support lisible par ordinateur selon la revendication 9, dans lequel l'étape de simulation d'actions de clic de la souris en fonction des coordonnées des autres blocs de couleur (103) comprend
la détermination de la distance en ligne droite entre les coordonnées du deuxième bloc de couleur et du troisième bloc de couleur, et la détermination que la distance en ligne droite est inférieure ou non à une valeur seuil prédéterminée ; la simulation d'une action d'appui sur un bouton gauche de la souris si la distance en ligne droite est inférieure à la valeur seuil prédéterminée ; la simulation d'une action de libération du bouton gauche de la souris si la distance en ligne droite n'est pas inférieure à la valeur seuil prédéterminée.

11. Support lisible par ordinateur selon la revendication 10, dans lequel l'étape d'obtention de trois modèles de bloc de couleur prédéterminés comprend
le port de trois manchons sur des doigts avec des couleurs différentes, et le stockage des couleurs des manchons comme modèles pour les blocs de couleur.

12. Support lisible par ordinateur selon la revendication 9, dans lequel les étapes suivantes sont comprises après l'étape de calcul du diagramme de distribution de probabilité de chaque bloc de couleur en fonction de l'histogramme correspondant :
le débruitage des diagrammes de distribution de probabilité par une opération de réduction du bruit ;
la réalisation d'un lissage gaussien sur les diagrammes de distribution de probabilité, et l'exécution d'une segmentation par seuil sur les diagrammes soumis à un lissage gaussien.
